# EUROPÄISCHE PATENTANMELDUNG

(11) **EP 1 688 030 A1**
(43) Veröffentlichungstag der Anmeldung: **09.08.2006**
(21) Anmeldenummer: 06101135.9
(22) Anmeldetag: 01.02.2006
(51) Int. Cl.: A01D 45/02

(54) **Teilerspitze für einen landwirtschaftlichen Erntevorsatz**

(30) Priorität: 08.02.2005 US 53496
(71) Anmelder: Deere & Company, Moline IL 61265-8098 (US)
(72) Erfinder: Mossman, Michael Wayne, Silvis, IL Illinois 61282 (US)
(74) Vertreter: Holst, Sönke

(57) **Zusammenfassung**

Die Erfindung bezieht sich auf eine Teilerspitze (16) für einen landwirtschaftlichen Erntevorsatz (10), mit:
einer vorderen Spitze (24) zur Führung von Erntegut in den Erntevorsatz (10), wobei die Spitze (24) eine abgeschrägte Oberfläche (32) umfasst, die sich in Längsrichtung von einer vorderen Position (34) nach hinten zu einer nach oben gewölbten, nachlaufenden Kante (36) erstreckt, welche zwischen einer normalen Betriebsposition und einer oder mehreren abgesenkten Betriebspositionen bewegbar ist,
einer rückwärtigen Abdeckung (26) zum Abdecken eines Teils des Erntevorsatzes, die eine Oberfläche (38) umfasst, die sich in Längsrichtung von unterhalb der nachlaufenden Kante (36) der Spitze (24) nach hinten erstreckt, und
einer Trennwand (28) zum Festhalten von Erntegut auf dem Erntevorsatz, die bei einer in der normalen Betriebsposition befindlichen vorderen Spitze (24) eine sich im Wesentlichen vertikal und seitlich zwischen der Oberfläche (32) der Spitze (24) und der Oberfläche (38) der rückwärtigen Abdeckung (26) erstreckende, flache Oberfläche umfasst.

## Beschreibung

Die Erfindung betrifft eine Teilerspitze für einen landwirtschaftlichen Erntevorsatz.

Ein Mähdrescher ist eine große landwirtschaftliche Maschine, die verwendet wird, unterschiedliche Arten von Erntegut von einem Feld zu ernten. Beim Erntebetrieb schneidet ein Erntevorsatz auf dem Feld stehendes, reifes Erntegut ab. Ein den Erntevorsatz abstützender Schrägförderer fördert das Erntegut in den Mähdrescher. Dresch- und Trennzusammenbauten innerhalb des Mähdreschers trennen Korn vom Erntegut und fördern das saubere Korn zur Zwischenlagerung in einen Korntank. Das von Korn verschiedene Material tritt an der Rückseite des Mähdreschers aus. Ein Entladeschneckenförderer fördert das saubere Korn aus dem Korntank zum Abtransport auf einen Lastwagen oder Überladewagen oder einen anderen Aufnahmebehälter zum Lagern.

Reihengebundene Erntevorsätze und Maispflücker werden normalerweise verwendet, um in Reihen angebautes Erntegut wie Sojabohnen oder Mais zu ernten. Diese Arten von Erntevorsätzen umfassen Teilerspitzen, die sich vom Erntevorsatz nach vorn erstrecken, um Erntegutreihen zu trennen und das Erntegut in die Reiheneinheiten des Erntevorsatzes zu leiten, die das Erntegut abschneiden. Beim Ernten von Mais mit einem Maispflücker können die Teilerspitzen mit einem Kolbenrückhalter (engl.: Ear Saver) genannten Element ausgestattet werden, um Maiskolben daran zu hindern, beim Erntebetrieb an der Vorderseite des Erntevorsatzes herunterzufallen. Der Kolbenrückhalter war traditionell eine abnehmbare Komponente, die an die Teilerspitze angebracht wurde oder ein dauerhaft, nicht abnehmbar daran angebrachtes, bereits im Entwurf vorgesehenes Merkmal der Reiheneinheit.

Bei stehendem Mais ist es wünschenswert, einen relativ großen Kolbenrückhalter zu haben, um beim Ernten im Wesentlichen alle Maiskolben daran zu hindern, vom Maispflücker herunterzufallen. Bei Lagermaisbedingungen bedingt ein großer Kolbenrückhalter jedoch eine Neigung an der Teilerspitze, die für das Erntegut zu steil ist, um leicht darüber und in die Reiheneinheiten zu gleiten. Für einen Kolbenrückhalter, der ein permanentes, nicht abnehmbares, bereits beim Entwurf berücksichtigtes Merkmal der Teilerspitze ist, beeinträchtigt eine Maximierung der Kolbenrückhalterhöhe für eine Bedingung die Leistung für die andere Bedingung. Alternativ gehen abnehmbare Kolbenrückhalter oft verloren, können in die Maschine gelangen und Schäden verursachen und es ist zeitaufwändig, sie bei sich ändernden Erntegutbedingungen zu installieren und zu entfernen.

Das der Erfindung zu Grunde liegende Problem wird darin gesehen, eine Teilerspitze bereitzustellen, die ohne abnehmbaren Kolbenrückhalter auskommt und dennoch bei unterschiedlichen Erntebedingungen eine gute Erntegutförderung ermöglicht.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung ermöglicht eine verstellbare Höhe des Kolbenrückhalters, ohne separate Komponenten an die Teilerspitze anzubringen oder davon zu entfernen. Der Kolbenrückhalter ist in der vorliegenden Erfindung ein sich aus der Höhendifferenz zwischen der Spitze und der Abdeckung der Teilerspitze ergebendes Merkmal. Die nachlaufende Kante der Spitze ist erfindungsgemäß gegenüber der Abdeckung höhenverstellbar. Dazu kann die Spitze um eine horizontal und quer zur Fahrtrichtung verlaufende Achse schwenkbar sein. Eine Verstellung der nachlaufenden Kante der Spitze gegenüber der Abdeckung in vertikaler Richtung nach unten oder oben ändert demnach auch die Höhe des Kolbenrückhalters. Bei normalen Erntebedingungen mit stehendem Mais wird die Spitze in eine normale Arbeitsposition verbracht, was eine maximale Höhe des Kolbenrückhalters zur Folge hat. Bei Lagermais, wo es wünschenswert ist, einen möglichst kleinen Widerstand für über die Teilerspitze gleitendes Erntegut zu erreichen, wird die Spitze in eine abgesenkte Arbeitsposition verbracht, was eine minimale Höhe des Kolbenrückhalters bedingt.

In den Zeichnungen ist ein nachfolgend näher beschriebenes Ausführungsbeispiel der Erfindung dargestellt. Es zeigt:
- Fig. 1: eine perspektivische Ansicht eines reihengebundenen Erntevorsatzes,
- Fig. 2: eine detaillierte perspektivische Ansicht einer Teilerspitze des Erntevorsatzes,
- Fig. 3: eine detaillierte perspektivische Ansicht der Unterseite zweier Teilerspitzen,
- Fig. 4: eine Seitenansicht des reihengebundenen Erntevorsatzes, in dem die Teilerspitzen mit ihren Spitzen in einer abgesenkten Arbeitsposition gezeigt werden,
- Fig. 5: eine Seitenansicht des reihengebundenen Erntevorsatzes, in dem die Teilerspitzen mit ihren Spitzen in einer normalen Arbeitsposition gezeigt werden,
- Fig. 6: eine perspektivische Ansicht, in der die Trennwand der Teilerspitzen mit in der abgesenkten Arbeitsposition befindlichen Spitzen gezeigt werden, und

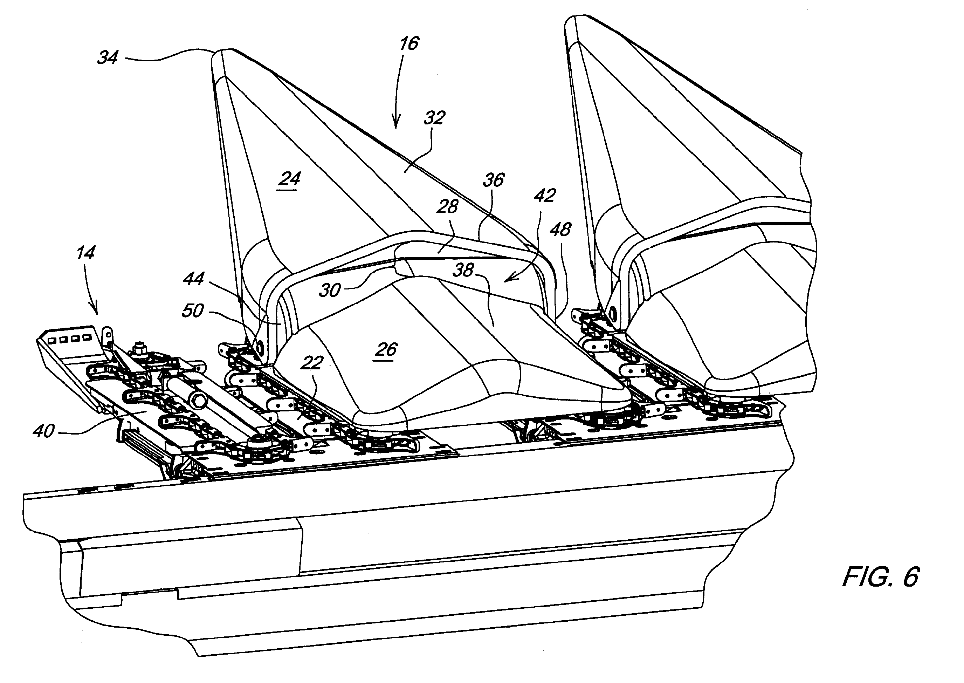

- Fig. 6: eine perspektivische Ansicht, in der die Trennwand der Teilerspitzen mit in der normalen Arbeitsposition befindlichen Spitzen gezeigt werden.

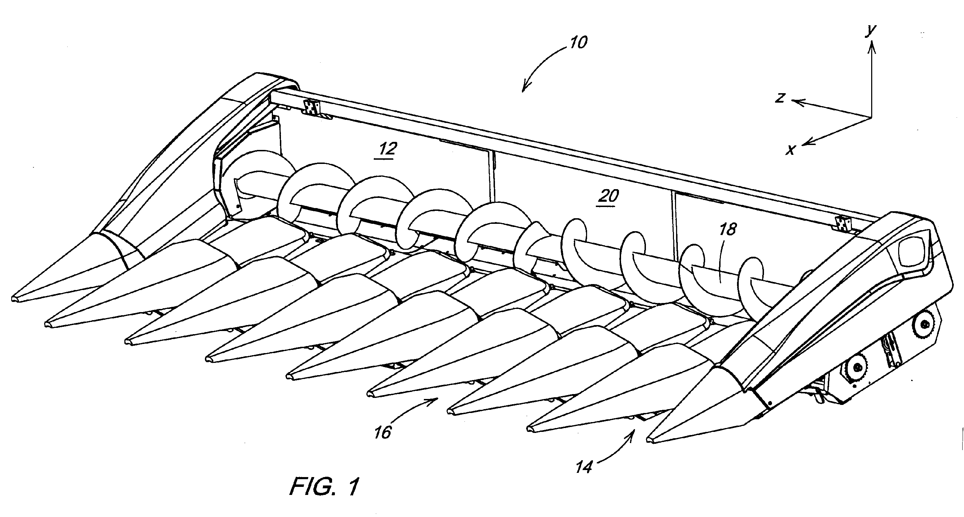

Die Figur 1 zeigt eine perspektivische Ansicht eines Erntevorsatzes 10. Im Folgenden beziehen sich Richtungsangaben, wie vorn und hinten, auf die Bewegungsrichtung des Erntevorsatzes 10 im Erntebetrieb, die in der Figur 1 nach links vorn verläuft.

Als Längsrichtung wird die Bewegungsrichtung verstanden.

Der Erntevorsatz 10 zur Maisernte umfasst in der dargestellten Ausführungsform einen Rahmen 12, mehrere entlang des Rahmens 12 verteilte Reiheneinheiten 14, zwischen den einzelnen Reiheneinheiten 12 positionierte Teilerspitzen 16, einen Schneckenförderer 18 zum Zusammenführen des Ernteguts hinter den Reiheneinheiten 14 und eine Öffnung 20 an der Mitte des Erntevorsatzes 10, die in den Mähdrescher führt. Gemäß der Figur 1 erstreckt sich der Rahmen 12 seitlich über die gesamte Breite des Erntevorsatzes 10 und dient zur Abstützung der Elemente des Erntevorsatzes 10. Die Reiheneinheiten 14 erstrecken sich mit ihren Längsrichtungen vom Rahmen 12 nach vorn und dienen zum Schneiden und Aufnehmen stehender Reihen von Mais. Die Teilerspitzen 16 sind oberhalb der Reiheneinheiten 14 befestigt und dienen dazu, die stehenden Reihen des Ernteguts aufzuteilen und in Richtung auf die Schneid- und Einführabschnitte 22 der Reiheneinheiten 14 zu führen. Der Schneckenförderer 18 erstreckt sich seitlich über die Breite des Erntevorsatzes 10 und dient zur Förderung geschnittenen Maises zur Öffnung 20 des Erntevorsatzes 10 und in den Mähdrescher.

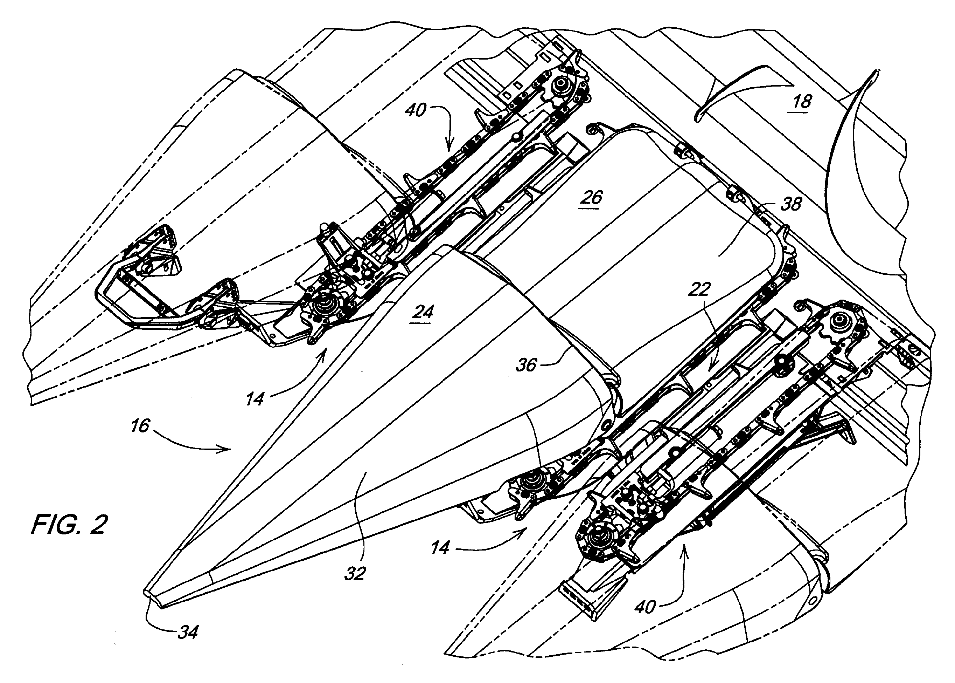

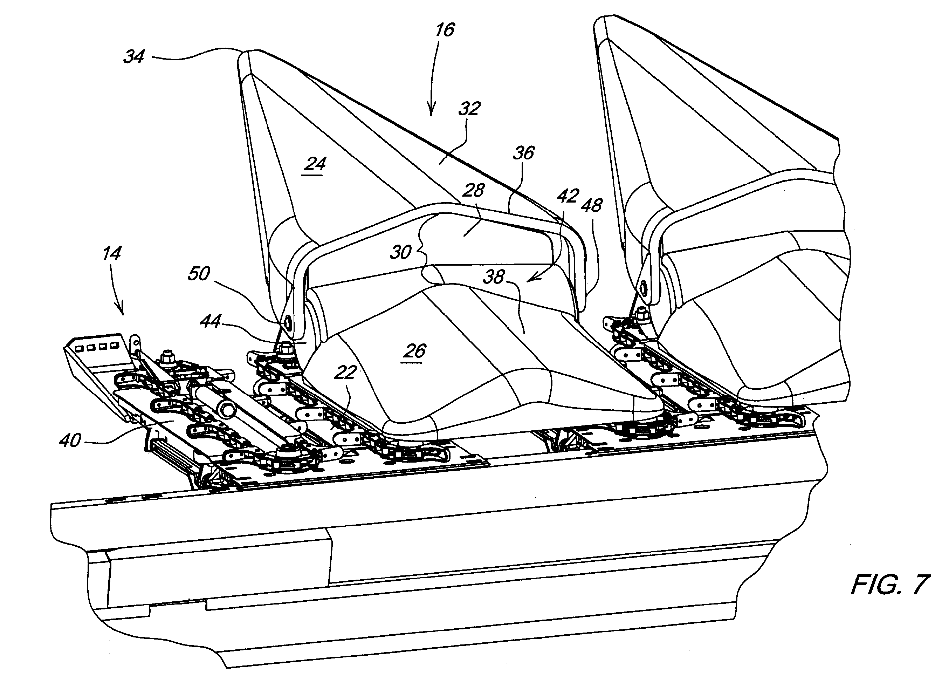

Die Teilerspitze 16 umfasst in der dargestellten Ausführungsform einen als Spitze 24 bezeichneten vorderen Abschnitt, einen rückwärtigen, als Abdeckung 26 bezeichneten Abschnitt und eine Trennwand 28, die einen sich ergebenden vertikalen und seitlichen Spalt 30 zwischen der Spitze 24 und der Abdeckung 26 ausfüllt. Es wird auf die Figur 2 Bezug genommen, gemäß der die Spitze 24 eine Komponente mit einer abgeschrägten Oberfläche 32 ist, die sich in Längsrichtung von einer vorderen Position 34 nach hinten zu einer bezüglich der seitlichen Richtung nach oben gewölbten, nachlaufenden Kante 36 erstreckt. Die Spitze 24 dient der primären Funktion der Teilerspitze 16, die stehenden Maisreihen aufzuteilen und zu den Reiheneinheiten 14 zu führen. Die Abdeckung 26 ist eine Komponente mit einer Oberfläche 38, die sich in Längsrichtung von unterhalb der nachlaufenden Kante 36 der Spitze 24 nach hinten erstreckt. Die Abdeckung 26 dient dazu, das geschnittene Erntegut von beweglichen Teilen 40 der Reiheneinheit 14 abzuschirmen, wenn das Erntegut in Richtung auf den Mähdrescher daran vorbeiläuft. Es wird auf die Figuren 6 und 7 verwiesen, gemäß denen der Bereich zwischen der Oberfläche 38 der Abdeckung 26 und der nachlaufenden Kante 36 der Spitze 24 den sich ergebenden vertikalen und seitlichen Spalt 30 definiert. Wenn die Trennwand 28 vorhanden ist, wird dieses Merkmal ein Kolbenrückhalter 42, der derart wirkt, dass er Maiskolben daran hindert, während des Erntebetriebs über die Vorderseite des Erntevorsatzes 10 zu fallen.

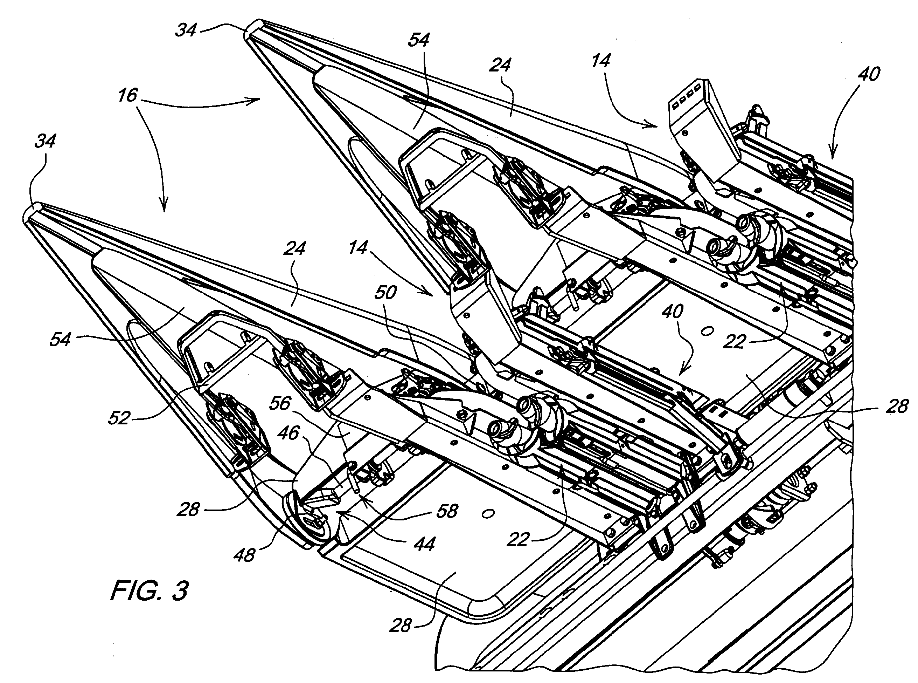

Eine Kurbelwelle 44 mit einer Welle 46 und versetzten Kurbelstiften 48, 50 an jedem Ende erstreckt sich in der Nähe der nachlaufenden Kante 36 seitlich über die Breite der Spitze 24. Es wird auf die Figur 3 Bezug genommen, gemäß der die Welle 46 drehbar an der Vorderseite der Abdeckung 26 angebracht ist, wobei die Spitze 24 schwenkbar an den Kurbelstiften 48, 50 angebracht ist und die Trennwand 28 verschiebbar an den Kurbelstiften angebracht ist. Die Kurbelwelle 44 wirkt derart, dass sie die nachlaufende Kante 36 der Spitze 24 gegenüber der Oberfläche 38 der Abdeckung 26 vertikal bewegt (indem die Spitze 24 um ihren Auflagepunkt auf der Abstützung 52 gedreht wird), wobei sie auch eine Schwenkbewegung der Spitze 24 um die Kurbelstifte 48, 50 ermöglicht. Die Kurbelwelle 44 wirkt außerdem derart, dass sie die Trennwand 28 vertikal gemeinsam mit der nachlaufenden Kante 36 bewegt und somit die Überdeckung des Spalts 30 für die Kolbenrückhaltefunktion 42 aufrechterhält. Eine Abstützung 52 erstreckt sich von benachbarten Paaren von Reiheneinheiten 14 nach vorn und stützt die Spitze 24 ab, die an einem Mittelpunkt 54 unterhalb der Oberfläche 32 der Spitze 24 auf der Abstützung 52 ruht. Eine an der Vorderseite der Abdeckung 26 angebrachte Führung 56 dient dazu, den Bewegungsbereich der Trennwand 28 in Längsrichtung auf den Spalt 30 zu begrenzen. Ein Bediener kann die Kurbelwelle 44 manuell bewegen und sie mit einem Wellenschloss 58, wie beispielsweise einem in der dargestellten Ausführungsform gezeigten federvorgespannten Verriegelungsstift, an Ort und Stelle verriegeln. Alternativ könnte ein Aktor (nicht gezeigt), wie ein Elektromotor oder ein hydraulischer Zylinder, mit einer beabstandeten Kontrolle durch den Bediener oder einer elektronischen Steuerung die Position der Kurbelwelle 44 verändern und festhalten.

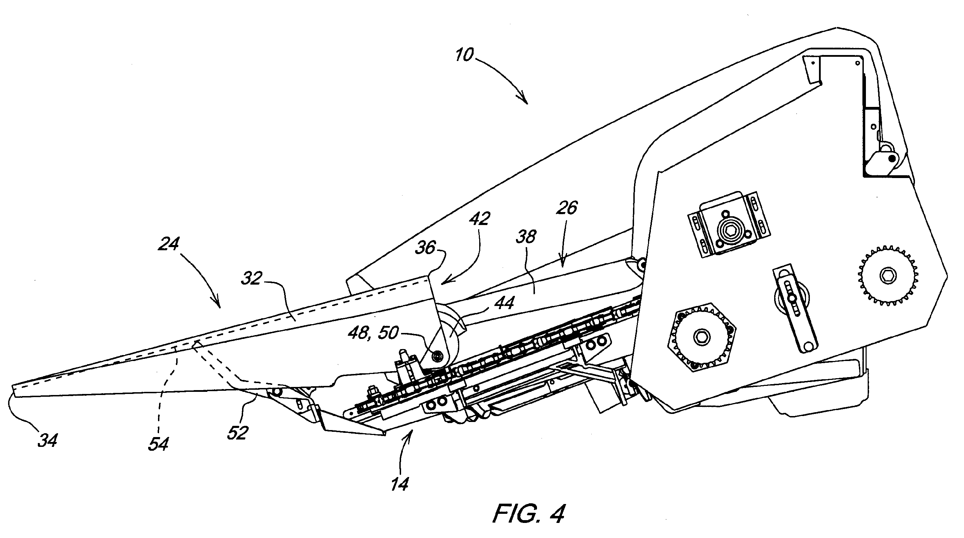

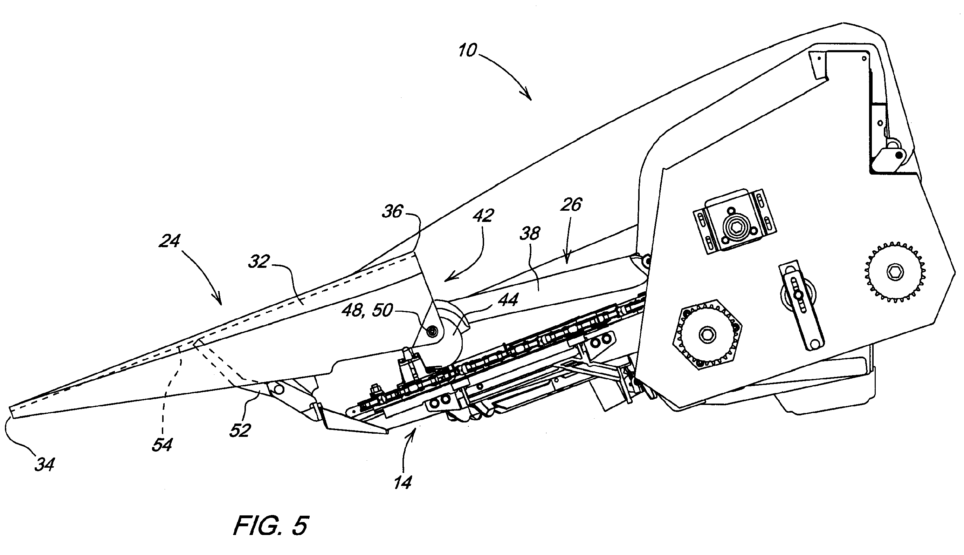

Während eines Erntebetriebs unter normalen Bedingungen wird die Position der Kurbelwelle 44 normalerweise in eine angehobene Stellung verbracht, wie in der Figur 5 gezeigt, wobei die Kurbelstifte 48, 50 direkt oberhalb der Welle 46 orientiert sind. Die angehobene Position der Kurbelwelle 44 hat eine angehobene Position der nachlaufenden Kante 36 und einen maximalen Spalt 30 zwischen dem nachlaufenden Ende und der Oberfläche 38 der Abdeckung 26 zur Folge, was eine maximale Leistung des Kolbenrückhalters 42 bereitstellt. Während eines Erntebetriebs mit Lagermais kann die Kurbelwelle 44 gedreht werden, um die nachlaufende Kante 36 gegenüber der Oberfläche 38 der Abdeckung 26 abzusenken, wie in der Figur 4 dargestellt, wodurch der Winkel der Spitze 24 gegenüber der Horizontalen vermindert wird und der Widerstand für über die Teilerspitze 16 gleitendes Erntegut minimiert wird. Die dargestellte Ausführungsform stellt nur eine einzige abgesenkte Position der Kurbelwelle 44 dar, in der die Kurbelstifte 48, 50 direkt unterhalb der Welle 46 orientiert sind. Diese abgesenkte Position der Kurbelwelle 44 hat einen minimalen Spalt 30 zwischen der nachlaufenden Kante 36 und der Oberfläche 38 der Abdeckung 26 zum Ergebnis. Alternativ könnten auch zusätzliche Zwischenpositionen der Kurbelwelle 44 bereitgestellt werden. Außerdem kann die Verwendung eines Aktors eine unendlich oder beliebig hohe Anzahl an Zwischenpositionen der Kurbelwelle 44 ermöglichen.

## Patentansprüche

1. Teilerspitze (16) für einen landwirtschaftlichen Erntevorsatz (10), mit:
einer vorderen Spitze (24) zur Führung von Erntegut in den Erntevorsatz (10), wobei die Spitze (24) eine abgeschrägte Oberfläche (32) umfasst, die sich in Längsrichtung von einer vorderen Position (34) nach hinten zu einer nach oben gewölbten, nachlaufenden Kante (36) erstreckt, welche zwischen einer normalen Betriebsposition und einer oder mehreren abgesenkten Betriebspositionen bewegbar ist,
einer rückwärtigen Abdeckung (26) zum Abdecken eines Teils des Erntevorsatzes, die eine Oberfläche (38) umfasst, die sich in Längsrichtung von unterhalb der nachlaufenden Kante (36) der Spitze (24) nach hinten erstreckt, und
einer Trennwand (28) zum Festhalten von Erntegut auf dem Erntevorsatz (10), die bei einer in der normalen Betriebsposition befindlichen vorderen Spitze (24) eine sich im Wesentlichen vertikal und seitlich zwischen der Oberfläche (32) der Spitze (24) und der Oberfläche (38) der rückwärtigen Abdeckung (26) erstreckende, flache Oberfläche umfasst.

2. Teilerspitze (16) nach Anspruch 1, **dadurch gekennzeichnet, dass** weiterhin eine Abstützung (52) zum Abstützen der Spitze (24) in vertikaler Richtung vorhanden ist, und dass eine Kurbelwelle (44) vorgesehen ist, um die Spitze (24) gegenüber dem Erntevorsatz (10) zu verschwenken, wobei die Kurbelwelle (44) eine sich seitlich erstreckende, gegenüber der Abdeckung (26) drehbar gelagerte Welle (46) und einen oder mehrere versetzte Wellenstifte (48, 50) umfasst, die in der Nähe ihrer nachlaufenden Kante (36) drehbar an der Spitze (24) angebracht sind.

3. Teilerspitze (16) nach Anspruch 2, **dadurch gekennzeichnet, dass** ein Wellenschloss (58) zum wahlweisen Verriegeln der Kurbelwelle (44) in einer gewünschten Arbeitsposition vorhanden ist.

4. Teilerspitze (16) nach Anspruch 2 oder 3, **dadurch gekennzeichnet, dass** eine Führung (56) zur Begrenzung des Bewegungsbereichs der Trennwand (28) in Längsrichtung vorhanden ist, und dass die Kurbelwelle (44) die Trennwand (28) vertikal verstellt und am Erntevorsatz (10) hält, wobei ein oder mehrere Kurbelstifte (48, 50) gleitend an der Trennwand (28) angebracht sind.

5. Teilerspitze (16) nach einem der Ansprüche 1 bis 4, **dadurch gekennzeichnet, dass** eine Abstützung (52) zum Abstützen der Spitze (24) in vertikaler Richtung vorhanden ist, an der die Spitze (24) zur Verstellung der Position der nachlaufenden Kante (36) zwischen einer normalen Betriebsposition und einer oder mehreren abgesenkten Betriebspositionen um eine sich horizontal und quer zur Vorwärtsrichtung erstreckende Drehachse verschwenkbar gelagert ist, und dass die Drehachse gegenüber der nachlaufenden Kante (36) nach vorn versetzt ist und sich vorzugsweise in Längsrichtung der Spitze (24) etwa in ihrer Mitte befindet.

6. Teilerspitze (16) nach einem der Ansprüche 1 bis 5, **dadurch gekennzeichnet, dass** die Trennwand (28) gegenüber der Abdeckung (26) in vertikaler Richtung verschiebbar ist.

7. Erntevorsatz (10) für eine landwirtschaftliche Erntemaschine mit einem Rahmen (12) zur Abstützung des Erntevorsatzes (10), zwei oder mehr Reiheneinheiten (14) zum Abschneiden von Erntegut, die jeweils eine sich in Längsrichtung vom Rahmen (12) nach vorn erstreckende Struktur umfassen und einem oder mehreren Teilerspitzen (16) nach einem der Ansprüche 1 bis 6.
